# EUROPEAN PATENT APPLICATION

(11) **EP 4 020 884 A1**
(43) Date of publication of application: **29.06.2022**
(21) Application number: 21211803.8
(22) Date of filing: 01.12.2021
(51) Int. Cl.: H04L 9/40

(54) **DELEGATED AUTHORIZATION SERVICE**

(30) Priority: 22.12.2020 US 202017130742
(71) Applicant: BlackBerry Limited, Waterloo, Ontario N2K 0A7 (CA)
(72) Inventor: MADEJ, Piotr, Waterloo, N2K 0A7 (CA); PETRONIJEVIC, Dejan, Waterloo, N2K 0A7 (CA); MULLA, Imtiyaz Ahmed, Waterloo, N2K 0A7 (CA)
(74) Representative: Murgitroyd & Company

(57) **Abstract**

A method and authorization delegation system for authorizing access to resources or services. The method comprising receiving an authorization request from a resource or service provider, the authorization request based on a request by a requestor for access to a resource or service provided by the resource or service provider; determining identity information for the requestor and an authorizer associated with the authorization request; forwarding the authorization request to the authorizer using the identity information; and sending a notification of authorization to the resource or service provider for access to the requested resource or service, the notification of authorization based on a response to the authorization request from the authorizer and an authorization policy. The authorization delegation system comprising a requestor, a resource or service provider, a delegated authorization service, and an authorizer.

## Description

### FIELD

The present application generally relates to access security, and more particularly, to increasing efficiency of approval processes for access security.

### BACKGROUND

Many applications and services require user authentication as part of their normal workflow when actions or resources are requested. In some cases, additional authorization or approval is needed before access is granted to such actions or resources.

It is inefficient for each and every resource or service provider to keep track of who has approval authority for each and every resource/service. It is likewise impractical for resource or service providers to communicate with the myriad approval authorities.

### SUMMARY

Accordingly there is provided a method, an authorization delegation system, and a computer program as detailed in the claims that follow.

### BRIEF DESCRIPTION OF THE DRAWINGS

Reference will now be made, by way of example, to the accompanying drawings which show example embodiments of the present application, and in which:
FIG. 1 shows, in flowchart form, an example method of delegating authorization for access to resources or services.
FIG. 2 illustrates, in schematic form, an example authorization delegation system for authorizing access to resources or services.
FIG. 3 illustrates, in schematic form, an alternative embodiment of the example authorization delegation system for authorizing access to resources or services.
FIG. 4 illustrates, in schematic form, an example use case of an authorization delegation system for authorizing access to medication insurance payment.

Similar reference numerals may have been used in different figures to denote similar components.

### DESCRIPTION OF EXAMPLE EMBODIMENTS

In a first aspect, the present application describes a method of delegating authorization for access to resources or services. The method may include receiving an authorization request from a resource or service provider, the authorization request based on a request by a requestor for access to a resource or service provided by the resource or service provider; determining identity information for the requestor and an authorizer associated with the authorization request; forwarding the authorization request to the authorizer using the identity information; and sending a notification of authorization to the resource or service provider for access to the requested resource or service, the notification of authorization based on a response to the authorization request from the authorizer and an authorization policy.

In a second aspect, the present application describes an authorization delegation system for authorizing access to resources or services. The system may include a requestor for requesting access to a resource or service; a resource or service provider for sending an authorization request based on the request for access; a delegated authorization service for: determining identity information for the requestor and an authorizer associated with the authorization request, forwarding the authorization request using the identity information, and sending a notification of authorization to the resource or service provider for access to the requested resource or service, the notification of authorization based on a response to the authorization request from the authorizer and an authorization policy; and an authorizer for providing the response to the authorization request.

In a third aspect, the present application describes a computer-readable storage medium storing processor-executable instructions that, when executed by a processor, cause the processor to perform any of the methods described herein. The computer-readable storage medium may be non-transitory. In this respect, the term processor is intended to include all types of processing circuits or chips capable of executing program instructions.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... or..." is intended to cover any one or more of the listed elements, including any one of the listed elements alone, any sub-combination, or all of the elements, without necessarily excluding any additional elements, and without necessarily requiring all of the elements.

As noted above, there is a need to simplify the workflow of approval processes for access to resources or services. It would be advantageous to add an additional layer of security on top of user authentication and access policy. Such additional layer of security could handle the approval process in cases where additional authorization is called for.

Accordingly, in accordance with one aspect of the present application, a method of delegating authorization for access to resources or services is described. The method, in one example implementation, forwards an authorization request received from a resource or service provider to an authorizer using determined identity information, and sends a notification of authorization to the resource or service provider for access to the requested resource or service based on a response to the authorization request from the authorizer and an authorization policy.

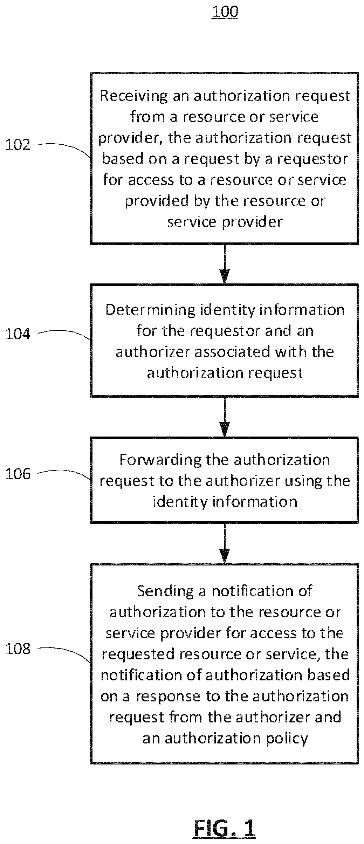

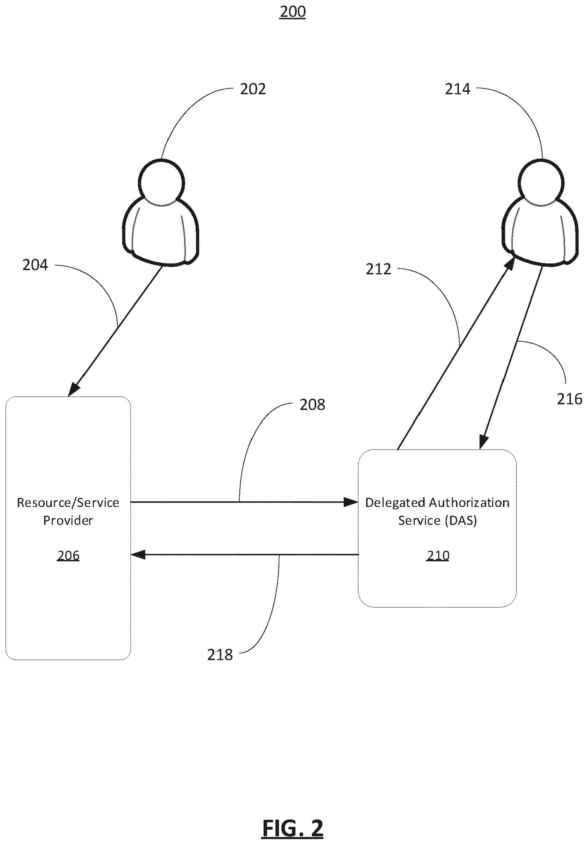

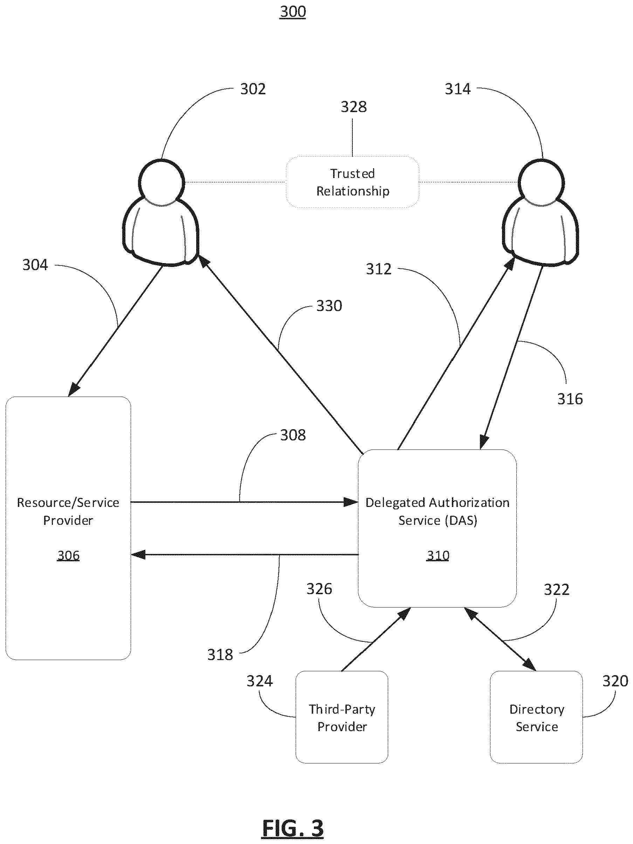

Reference is now made to FIG. 1, which shows a method 100 of delegating authorization for access to resources or services in accordance with an example of the present application. The method 100 may be implemented by one or more computing devices having suitable computer-executable instructions for causing the computing device(s) to carry out the described operations. The instructions may be implemented by way of a software module or application executing on a computing device. Portions of the method 100 may be carried out by an authorization delegation system as depicted in FIG. 2 or 3 and, in particular, by the Delegated Authorization Service 210 (FIG. 2) and/or the Delegated Authorization Service 310 (FIG. 3).

At operation 102, the method 100 includes receiving an authorization request from a resource or service provider. The authorization request is based on a request by a requestor for access to a resource or service provided by the resource or service provider.

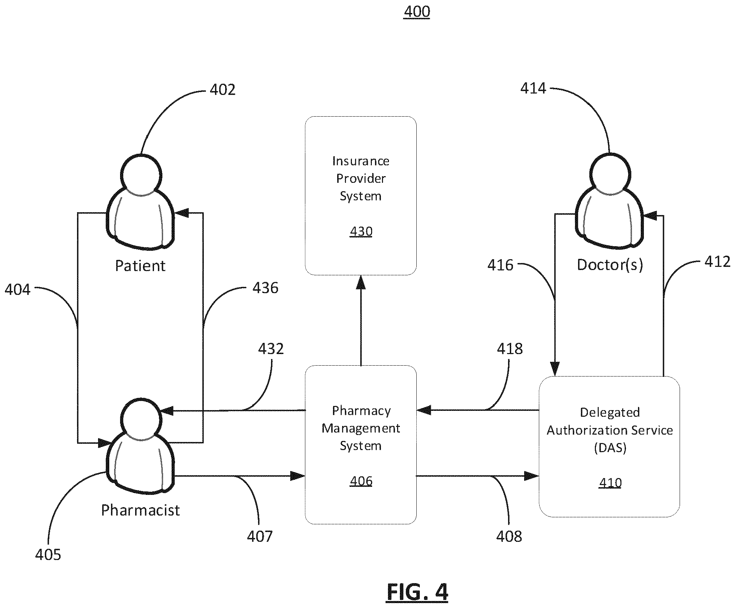

In one example, a requestor may be a patient looking to have a prescription filled, and the resource or service being requested may be insurance coverage of the prescription (as further discussed in relation to FIG. 4). It is to be noted that the requestor may include one or more entities, and may also include any devices that facilitate requesting resources or services, such as, for example, a computing device, a mobile device, a kiosk, and the like.

It may be that the authorization request, based on the request, includes information related to the requestor identity, and the nature of the request (i.e. what resource or service). Additionally, or alternatively, it may be that the authorization request has less information than the original request in that certain information has been stripped out, such as, for example, confidential information, personally identifying information, or any other information not required for authorizing access to the requested resource or service.

At operation 104, the method 100 includes determining identity information for the requestor and an authorizer associated with the authorization request.

As described above, identity information of the requestor may be included in the authorization request, however, it may be basic identifying information. The method may retrieve full or more complete identity information of the requestor. Likewise, some identity information for an authorizer is optionally included in the authorization request, and supplemental identity information may be retrieved.

In one example embodiment, determining identity information for the requestor and the authorizer includes obtaining identity information from a directory service (as further discussed in relation to FIG. 3).

At operation 106, the method 100 includes forwarding the authorization request to the authorizer using the identity information (determined for the authorizer). It may be that the authorizer is, in fact, a group of authorizers. In this case, the authorization request is forwarded to each authorizer individually and/or to a group node which may, for example, forward the authorization request to its members.

At operation 108, the method 100 includes sending a notification of authorization to the resource or service provider for access to the requested resource or service. The notification of authorization is based on a response to the authorization request from the authorizer and an authorization policy.

In one example embodiment, the authorization policy is provided by a third-party provider. That is, the method 100 may apply one or more externally provided policies in sending the notification of authorization to the resource or service provider (as further discussed in relation to FIG. 3). In some examples, the one or more policies may be rules-based policies, or the one or more policies may be adaptive policies (e.g. leaming/AI-based policies).

As mentioned, in one example embodiment, the authorizer is a group of authorizers, and thus the response to the authorization request is a plurality of responses from the group of authorizers. It may be that the plurality of responses is received substantially synchronously with the forwarded authorization request, for example, by way a dynamic app (application) push/pull service, IM (instant messaging) service, or other real-time or near real-time mechanism. It may also be that the plurality of responses is received substantially asynchronously with the forwarded authorization request, for example, by way of email, SMS (short messaging service), voice call with menu prompts, or the like.

In a further example embodiment, the notification of authorization is based on an aggregation of the plurality of responses. The aggregation of the plurality of responses is may be subject to the authorization policy.

In one implementation, the authorization policy requires the aggregation of the plurality of responses to all be approvals in order for the notification of authorization to indicate a grant of access to the requested resource or service. That is, the aggregation of the plurality of responses must indicate that each and every authorizer of the group of authorizers responded positively to the authorization request.

In yet another implementation, the authorization policy requires a quorum of the aggregation of the plurality of responses to be approvals in order for the notification of authorization to indicate a grant of access to the requested resource or service. Such quorum may indicate a majority (>50%) of approvals, at least one approval, or any other selected possibility. For example, the plurality of responses may be weighted according to a hierarchy of the authorizers.

Reference is now made to FIG. 2, which illustrates an example authorization delegation system 200 for authorizing access to resources or services.

The authorization delegation system 200 includes a requestor 202, a resource or service provider 206, a delegated authorization service (DAS) 210, and an authorizer 214. The resource or service provider 206 relies on a decision provided by delegated authorization service 210 for accepting or rejecting an access request from the requestor 202.

The requestor 202 is for requesting access 204 to a resource or service (provided by the resource or service provider 206). The resource or service provider 206 is for sending an authorization request 208 to the delegated authorization service 210 based on the request for access. It may be that any exchanges between the resource or service provider 206 and the delegated authorization service 210 involve a trusted third-party (TTP), such as a certificate authority. The delegated authorization service 210 is for determining identity information for the requestor 202 and an authorizer 214 associated with the authorization request 208. It may be that identity information of the requestor 202 and authorizer 214 is included in the authorization request 208. It may also be that no identity information, or only basic identity information, is included in the authorization request 208 (see discussion in relation to Fig. 3). The delegated authorization service 210 is further for forwarding the authorization request 212 using the identity information. The delegated authorization service 210 is further for sending a notification of authorization 218 to the resource or service provider 206 for access to the requested resource or service, the notification of authorization 218 based on a response 216 to the authorization request 212 from the authorizer 214 and an authorization policy. It may be that the notification of authorization 218 comprises no information related to the identity of the authorizer 214.

Some example scenarios in which the authorization delegation system 200 may be used are briefly described.

### Government

A White House secretary is attempting to access restricted documents on a secure server. Based on access policy, she requires approval from senior officials. Those senior officials receive notifications on their devices (e.g. via a secure app) giving them information about whom is requesting access and to what documents. The senior officials approve access, and the secretary gets notified, as well as receives an access token to retrieve the documents.

### Banking/Financial

A client is negotiating a loan with a broker or financial adviser. The client is requesting an interest rate lower than that advertised. The broker/financial adviser enters the requested interest rate and submits document for approval. A bank manager receives notification on their device that authorization for a lower interest rate has been requested, along with information about the client. The bank manager approves the amended interest rate. The broker/financial adviser is notified on their device that approval has been received and proceeds to complete the loan application.

### Military

During a military operation, forces request drone support. The task force leader requests a drone strike using their mobile satellite device and provides GPS coordinates. The Operation Commander gets notification at Command Central with information about the target and who is requesting it. The Commander approves the request and a notification is sent to drone operations who issue a command for drone(s) to provide support for the troops.

Reference is now made to FIG. 3, which illustrates an alternative authorization delegation system 300 for authorizing access to resources or services. This example implementation is similar to the system 200 of FIG. 2 in that it also includes a requestor 302, a resource or service provider 306, a delegated authorization service (DAS) 310, and an authorizer 314. The requestor 302 is for requesting access 304 to a resource or service. The resource or service provider 306 is for sending an authorization request 308 based on the request for access. The delegated authorization service 310 is for determining identity information for the requestor 302 and an authorizer 314 associated with the authorization request 308. The delegated authorization service 310 is further for forwarding the authorization request 312 using the identity information. The delegated authorization service 310 is further for sending a notification of authorization 318 to the resource or service provider 306 for access to the requested resource or service, the notification of authorization 318 based on a response 316 to the authorization request 312 from the authorizer 314 and an authorization policy

However, in this authorization delegation system 300 there are two additional system components: directory service 320 and third-party provider 324. In this example, the delegated authorization service (DAS) 310 determines identity information for both the requestor 302 and the authorizer 314 by obtaining identity information 322 from a directory service 320. Directory service 320 may be one or more services providing a user lookup service, and may provide identity information such as, for example, phone numbers, email addresses, IMEI, social media handle, etc. Further in this example, the authorization policy is provided 326 to the delegated authorization service (DAS) 310 by a third-party provider 324. Third-party provider 324 may be one or more providers and may, for example, be either affiliated or unaffiliated with the resource or service provider 306.

In one example implementation, the delegated authorization service (DAS) 310 further determines that a trusted relationship 328 exists between the requestor 302 and the authorizer 314 based on the determined identity information, and as a result the delegated authorization service (DAS) 310 bases the notification of authorization 318 on the determined trusted relationship 328. For example, the delegated authorization service (DAS) 310 may determine that both the requestor 302 and the authorizer 314 belong to the same organization. As a further example, the delegated authorization service (DAS) 310 may determine that both the requestor 302 and the authorizer 314 belong to separate organizations, yet the separate organizations have a policy of trust between them.

In another example implementation, the delegated authorization service (DAS) 310 further sends an access token 330 directly to the requestor 302 for access to the requested resource or service if the notification of authorization 318 indicates a grant of access to the requested resource or service. That is, if the delegated authorization service (DAS) 310 determines, based on the response received 316 from the authorizer 314 and the authorization policy provided 326, that access is to be granted to the requestor 302, then the delegated authorization service (DAS) 310 may send an access token 330 directly to the requestor 302 thereby bypassing the resource or service provider 306. This could be used, for example, in time sensitive or time critical scenarios where quick access to the requested resource or service is of the utmost importance.

It will be appreciated that the components of both authorization delegation system 200 of FIG. 2 and alternative authorization delegation system 300 of FIG. 3 can communicate over one or more networks. That is, the requestor 202, 302 may be configured to communicate with the resource or service provider 206, 306 over such network(s). Likewise, the resource or service provider 206, 306 may be configured to communicate with the delegated authorization service 210, 310 over such network(s). Similarly, the delegated authorization service 210, 310 may be configured to communicate with one or more authorizers 214, 314, a directory service 320, a third-party (policy) provider 324, and the requestor 202, 302, over such network(s). The network(s) can include a plurality of interconnected wired and wireless networks, including the Internet, local area networks, wide area networks, or the like. It will be further appreciated that the delegated authorization service 210, 310 may take various forms, such as, for example, a stand-alone server, or an integrated software module. In some cases, the delegated authorization service 210, 310 may be administered by an independent entity, in which case initialization and updating of the delegated authorization service 210, 310 is the responsibility of the independent entity. In some other cases, the delegated authorization service 210, 310 may be integrated into the resource or service provider's 206, 306 own system, in which case responsibility for initializing and updating of the delegated authorization service 210, 310 lies with the resource or service provider 206, 306.

Reference is now made to FIG. 4, which illustrates an example use case of an authorization delegation system 400 for authorizing access to medication insurance payment.

In this example use case, a patient 402 has requested insurance coverage of a prescription medication with their pharmacist 405. The insurance provider has declined payment for the medication and instead recommends an approved alternative. The pharmacist 405 then suggests a generic alternative medication to the patient 402 contingent on the patient's doctor approving. The patient 402 agrees and requests approval 404 for the suggested alternative. At this point, the pharmacist enters (or sends) the request for the alternative medication 407 into their pharmacy management system 406. The pharmacy management system 406 in turn sends an authorization request 408 to the delegated authorization service (DAS) 410. The delegated authorization service (DAS) 410 first determines identity information for the patient 402 and doctor 414 associated with the authorization request 408. Next, DAS 410 forwards the authorization request 412 to the appropriate doctor 414 using their determined identity. After receiving a response to the authorization request 416, DAS 410 sends a notification of authorization 418 to the pharmacy management system 406 based on the response to the authorization request 416 from the doctor 414 and an authorization policy. The pharmacy management system 406 informs the insurance provider system 430 and also notifies 432 the pharmacist 405 of the notification of authorization 418. Finally, the pharmacist 405 is able to notify 436 the patient of the approval of the alternative medication.

Example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A computer-implemented method of delegating authorization for access to resources or services comprising:
receiving an authorization request from a resource or service provider, the authorization request based on a request by a requestor for access to a resource or service provided by the resource or service provider;
determining identity information for the requestor and an authorizer associated with the authorization request;
forwarding the authorization request to the authorizer using the identity information; and
sending a notification of authorization to the resource or service provider for access to the requested resource or service, the notification of authorization based on a response to the authorization request from the authorizer and an authorization policy.

2. The method of claim 1, wherein determining identity information for the requestor and the authorizer includes obtaining identity information from a directory service.

3. The method of claim 1 or 2, further comprising:
determining that a trusted relationship exists between the requestor and the authorizer based on the determined identity information,
wherein the notification of authorization is based on the determined trusted relationship.

4. The method of any preceding claim, wherein the authorization policy is provided by a third-party provider.

5. The method of any preceding claim, further comprising:
sending an access token directly to the requestor for access to the requested resource or service if the notification of authorization indicates a grant of access to the requested resource or service.

6. The method of any preceding claim, wherein the authorizer is a group of authorizers, and wherein the response to the authorization request is a plurality of responses from the group of authorizers, optionally wherein the notification of authorization is based on an aggregation of the plurality of responses.

7. The method of claim 6, wherein the:
authorization policy requires the aggregation of the plurality of responses to all be approvals in order for the notification of authorization to indicate a grant of access to the requested resource or service; or
the authorization policy requires a quorum of the aggregation of the plurality of responses to be approvals in order for the notification of authorization to indicate a grant of access to the requested resource or service.

8. An authorization delegation system for authorizing access to resources or services comprising:
a requestor for requesting access to a resource or service;
a resource or service provider for sending an authorization request based on the request for access;
a delegated authorization service for:
determining identity information for the requestor and an authorizer associated with the authorization request,
forwarding the authorization request using the identity information, and
sending a notification of authorization to the resource or service provider for access to the requested resource or service, the notification of authorization based on a response to the authorization request from the authorizer and an authorization policy; and
an authorizer for providing the response to the authorization request.

9. The authorization delegation system of claim 8, wherein determining identity information for the requestor and the authorizer includes obtaining identity information from a directory service.

10. The authorization delegation system of claim 8 or 9, wherein the delegated authorization service is further for:
determining that a trusted relationship exists between the requestor and the authorizer based on the determined identity information,
wherein the notification of authorization is based on the determined trusted relationship.

11. The authorization delegation system of any one of claims 8 to 10, wherein the authorization policy is provided by a third-party provider.

12. The authorization delegation system of any one of claims 8 to 11, wherein the delegated authorization service is further for:
sending an access token directly to the requestor for access to the requested resource or service if the notification of authorization indicates a grant of access to the requested resource or service.

13. The authorization delegation system of any one of claims 8 to 12, wherein the authorizer is a group of authorizers, and wherein the response to the authorization request is a plurality of responses from the group of authorizers, optionally wherein the notification of authorization is based on an aggregation of the plurality of responses.

14. The authorization delegation system of claim 13, wherein the authorization policy requires the aggregation of the plurality of responses to all be approvals in order for the notification of authorization to indicate a grant of access to the requested resource or service, or wherein the authorization policy requires a quorum of the aggregation of the plurality of responses to be approvals in order for the notification of authorization to indicate a grant of access to the requested resource or service.

15. A computer program which, when executed by a processor, is configured to cause the processor to carry out the method of any one of claims 1 to 7.
